# EUROPEAN PATENT SPECIFICATION

(11) **EP 0 434 105 B1**
(45) Date of publication and mention of the grant of the patent: **12.10.1994**
(21) Application number: 90203025.3
(22) Date of filing: 14.11.1990
(51) Int. Cl.: B65D 81/32, F16G 11/00, H02G 15/00, H02G 1/00

(54) **Apparatus for filling a cavity**
Vorrichtung zum Füllen eines Hohlraumes
Dispositif pour remplir une cavité

(30) Priority: 20.12.1989 NL 8903118
(43) Date of publication of application: 26.06.1991
(73) Proprietor: Lovink Terborg B.V., NL-7061 DT Terborg (NL)
(72) Inventor: Van den Hout, Johan Simon, NL-7051 WP Varsseveld (NL); Kaptein, Bartholomeus Johannes, NL-7071 CS Ulft (NL)
(74) Representative: Schumann, Bernard Herman Johan

(56) References cited:
- EP-A- 0 100 903
- FR-A- 2 272 322
- FR-A- 2 301 119
- GB-A- 2 134 067

## Description

For assembling and finishing cable sleeves, for example, use is often made of two-component insulating material. Such materials usually fall within the provisions of environmental legislation. The liquid remnants left over after assembly of the cable sleeve are chemical waste and the individual components are harmful, irritant and/or flammable during processing so that these substances have to be dealt with extremely carefully.

The invention has for its object to provide a system for filling a cavity wherein all provisions of environmental legislation can be satisfied in simple manner, while nuisance or danger to persons working with the system is also virtually entirely eliminated.

It is known that the two components have to be separately packed and have to be combined and mixed on-site shortly before use. A known packaging consists for example of two cans, which may or may not be in integrated form, the contents whereof are combined and mixed. Harmful vapours may be released during this open mixing, while spillage can moreover not be ruled out. The remaining, not wholly empty cans form relatively voluminous waste. The advantage of working with these cans is that mixing can be carried out in a clearly observable and therefore well controllable manner, also in large quantities, for instance several tens of kilograms. GB-A-2 134 067 shows a package having three compartments mutually separated by two rupturable barrier means, one of which compartments serving as a mixing chamber.

The invention now offers an apparatus for filling a cavity enclosed by a housing with a mixture of two components, for example a cable sleeve, and having a filling opening for placing the mixture in the cavity, in which flexible packaging having three compartments which are mutually separated by two removable dividers and two of which compartments are adjoining and contain the two respective components and the third of which serves as a filling tube for insertion in the access opening, which two compartments containing the components can be placed in open communication with one another by removal of the divider, whereafter through kneading of the packaging the two components can form the mixture, whereafter the filling tube can be inserted into the filling opening, the second divider can be removed and the mixture can be carried into the cavity via the filling tube by pressing out the packaging.

According to the invention a removable divider is embodied as two strips pressed resiliently towards one another with clamping of the packaging, for instance in the manner of a hair-pin.

A very reliable coupling between the end of the filling tube and the filling opening is ensured with a hollow conical wedge piece. The end of the filling tube is coupled to the edge of the filling opening by means of the hollow conical wedge piece which is first placed into that end, whereafter that end is inserted clampingly with the zone corresponding to the position of the wedge piece in the filling opening clamping the end of the filling tube.

In a preferred embodiment the system is characterized by a housing with a filling opening about which extends a standing wall forming a tray on which can be placed a closing cover. After squeezing out the mixture into the cavity the packaging, in which some of the mixture may still be present, can be laid in the tray which can then be closed by the cover. Any waste is thus made harmless very effectively without there being any danger of leakage, spillage or the like.

In a particular embodiment the system is characterized by a venting opening arranged in the housing adjacent to the filling opening and having a filter placed therein for absorbing harmful vapours emanating from the mixture. Thus prevented is that during filling the harmful vapours that may come from the mixture bring about pollution.

In order to ensure that a possible excess of mixture is not spilled the embodiment is recommended wherein the venting opening is situated below the upper edge of the tray. In this embodiment the tray collects the overflowing excess mixture.

In a particular embodiment the system is characterized by a transparent wall portion of the housing situated in the vicinity of the filling opening. If desired, such a wall portion can be a loose insert piece and serve for visual checking of the cavity, for instance to establish whether the cores present in the cable sleeves are not making a connection against the wall and to determine the degree of filling with mixture.

An easy manner of kneading in order to achieve an homogeneous mixture is ensured with a drivable wringer with co-acting press rollers, at least one of which is profiled, for kneading the packaging. The profiling can serve to press the mixture through the recesses without excessive pressure build-up in the packaging.

A preferred embodiment of the system according to the invention has the feature that the packaging is annular and the dividers extend more or less in transverse direction thereof, wherein the filling tube is separated on the one side by the stated second removable divider and on the other side by a third divider from the two first compartments and can be cut through to form the end of the filling tube. Such a packaging is easily manageable by hand and is particularly easy to use together with the said drivable wringer, in which case the system is preferably characterized by a reversing roller whereover the packaging can be carried back to the wringer after leaving same.

It is noted in this respect that it can be determined from practical experience how many times the packaging must pass through the wringer to achieve a sufficient homogeneity of the mixture.

The invention will now be elucidated with reference to the annexed drawing, wherein:
Figure 1 shows a partly broken away perspective view of a cable sleeve according to the invention;
figure 2 shows a packaging according to the invention in perspective view;
figure 3 is a schematic side view of the packaging according to figure 2;
figure 4 shows the packaging of figure 3 in a following handling stage;
figure 5 shows the packaging in a subsequent handling stage;
figure 6 shows the packaging in a subsequent handling stage;
figure 7 shows partly in cross section and partly in side view the cable sleeve of figure 1 in finished state; and
figure 8 is a schematic side view of a mixing device according to the invention.

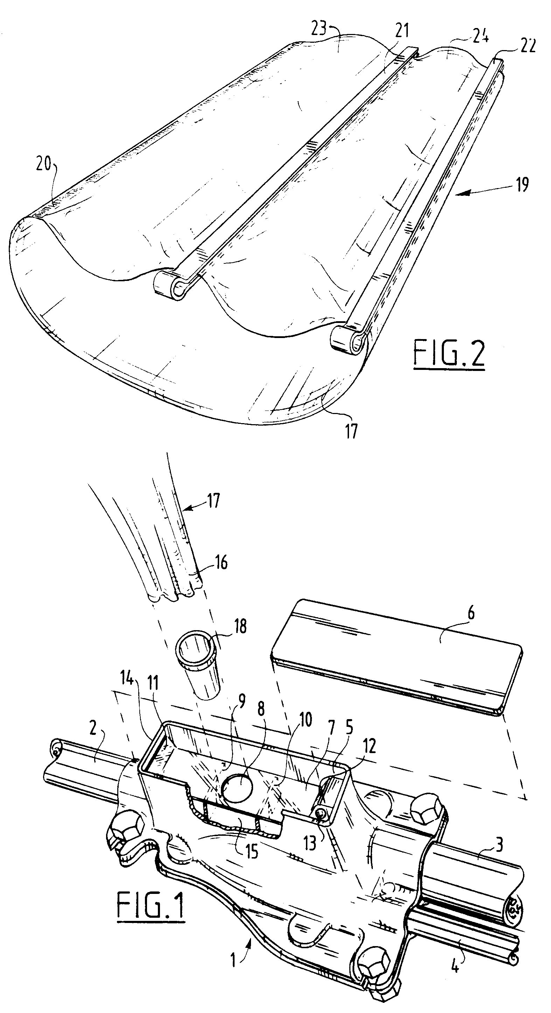

Figure 1 shows a cable sleeve 1 which serves for mutual connection of cables 2, 3, 4.

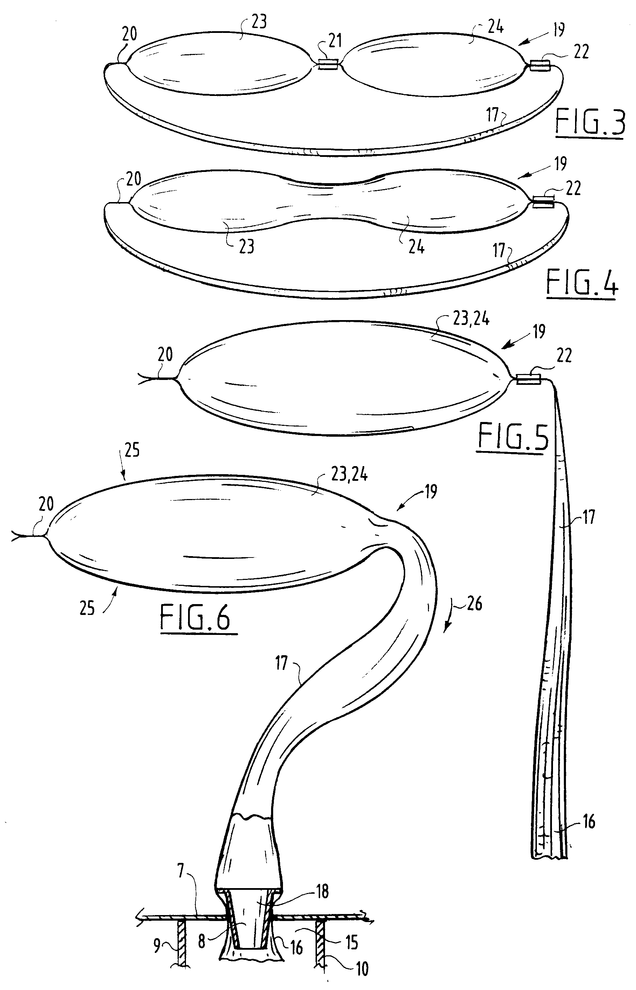

Situated on the sleeve 1 is a tray 5 which can be closed by a cover 6. The bottom of tray 5 is formed by a transparent plate 7 with a hole 8 serving as filling opening. The bottom 7 is supported by two ribs 9, 10 formed in the sleeve 1. The bottom 7 has two upward sloping ends 11, 12 whereby in this embodiment it is arranged lightly clamping in the tray 5. A venting opening 13 connects under the level of the top edge 14 of the tray via a venting channel to the cavity 15 enclosed by the cable sleeve 1. Not drawn is a carbon filter located in the venting channel whereby during the filling of the cavity 15 to be described below no harmful vapours can escape. Figure 1 further shows an end 16 of a filling tube 17 to be described hereinafter which can be sealingly and clampingly coupled by means of a hollow, conical wedge piece 18 to the filling opening 8. This aspect will be discussed further with reference to figure 6.

Figure 2 shows a flexible packaging 19 in the form of an annular plastic tube comprising a transverse seal seam 20 in addition to two metal clamps 21, 22. The seal seam 20 and the metal clamp 21 form the dividers bounding a first compartment 23. The clamps 21 and 22 bound a second compartment 24 in analogous manner. The compartments 23 and 24 contain the two components which are mixed with one another at a later stage, whereafter the formed mixture has to be carried into the cable sleeve 1. The metal clamp 22 bounds with the seal seam 20 an empty part of the packaging which will later serve as filling tube.

With reference to the figures 3, 4 and 5 the packaging 19 and operating therewith will be discussed in more detail.

Figure 3 shows the packaging 19 in its original form. It will be apparent that the packaging 19 has the form of a closed loop or ring. As a result it can be very easily carried and handled by a user.

Figure 4 shows a following phase wherein the clamp 21, which formed the division between the compartments 23 and 24, is removed. The compartments 23 and 24 thereby come into open communication with one another, whereby the user has the opportunity to mix together the two components present therein by kneading the packaging 19.

Figure 5 shows, likewise schematically, the final form wherein the compartments 23, 24 form one entity and contain the homogeneous mixture.

The filling tube 17 is also brought in its final form by cutting it through in the vicinity of the seal seam 17. The free end 16 of the filling tube is thereby made available as according to figure 1.

Figure 6 shows that the conical wedge piece is arranged in the end 16 of the filler tube 17. This takes place prior to the removal of the metal clamp 22, therefore with the filling tube 17 in "clean" state. In the manner indicated in figure 6 the end 16 of the filling tube is inserted clampingly into the filling opening 8 making use of the wedge piece 18 such that by squeezing out packaging 19 according to arrows 25 the mixture can be admitted as according to arrow 26 via the filling tube 17 into the cavity 15.

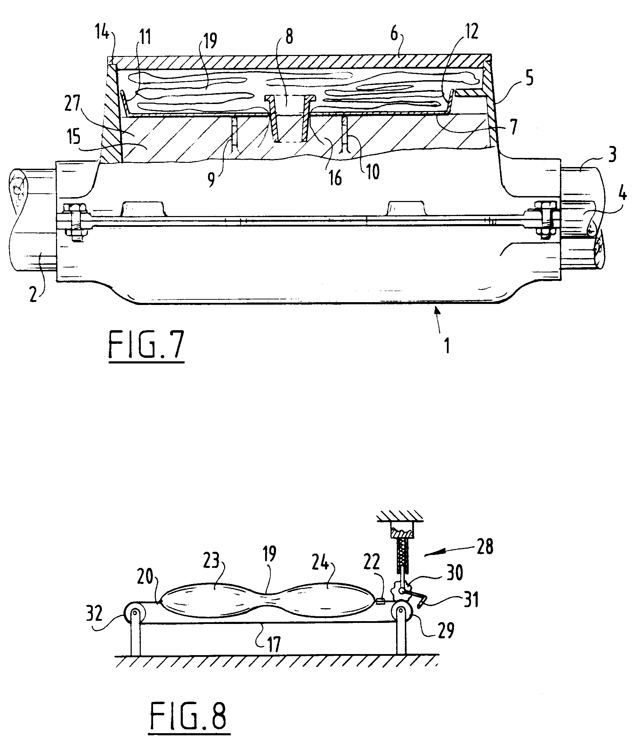

Figure 7 shows the assembled cable sleeve 1 filled with mixture 27. As will be apparent, in the assembled state of the cable sleeve as shown in figure 7, the whole packaging 19, after having been at least substantially emptied, is laid on the bottom 7 without breaking the coupling by means of the wedge piece 8, whereafter the tray 5 is closed by the cover 6. The last phase in the assembly of the cable sleeve 1 is thereby completed.

Finally, figure 8 shows a mixing device 28 wherein a packaging is placed in the phase of figure 4. The device 28 comprises an unprofiled press roller 29 and, spring-loaded towards it, a profiled press roller 30 which is drivable by a handle 31. This wringer construction serves for mixing of the two components in the compartments 23 and 24 during wringing. Due to the closed loop form of the packaging 19 the action of the device 28 can take place continuously. To this end the packaging is guided over a reversing roller 32.

It will be apparent that the invention is not limited to cable sleeves.

Pressing out of the packaging in the situation of figure 6 can be carried out manually without extra tools; in order to ensure the fullest possible emptying of the packaging, however, squeezing out the compartment 23, 24 by winding up in the per se known manner of a tube by means of a rotatable clamp could also be used.

## Claims

1. Apparatus for filling with a mixture of two components a cavity enclosed by a housing, for example a cable sleeve, and having a filling opening for placing the mixture into the cavity, said apparatus comprising a hollow conical wedge piece (8)
and flexible packaging (19) having three compartments (17,23,24) mutually separated by two removable dividers (21,22), two of which compartments (23,24) are adjoining and contain the two respective components and the third of which serves as a filling tube (17) for insertion in the access opening,
which two compartments (23,24) containing the components can be placed in open communication with one another by removal of the first divider (21), whereafter through kneading of the packaging the two components can form the mixture,
the filling tube (17) being insertable into the filling opening,
and the second divider (22) being removable, such that
the mixture can be carried into the cavity via the filling tube (17) by pressing out the packaging,
in which
the removable dividers (21,22) are embodied as two strips pressed to one another resiliently to clamp of the packaging, for instance in the manner of a hair-pin, and whereby
said hollow conical wedge piece couples the end of the filling tube (16) to the edge of the filling opening, said hollow conical wedge piece being insertable into said end (16), and said end (16) being insertable in the filling opening at the zone corresponding to the position of the wedge piece (8) thus clamping the end of the filling tube (16).

2. Apparatus as claimed in claim 1,
**characterized by**
a housing with a filling opening (8) about which extends a standing wall forming a tray (5) on which can be placed a closing cover (6).

3. Apparatus as claimed in claim 4,
**characterized by**
a venting opening (13) arranged adjacent to the filling opening in the housing (8) and having a filter placed therein for absorbing harmful vapours emanating from the mixture.

4. Apparatus as claimed in claim 5,
**characterized in that**
the venting opening (13) is situated below the upper edge of the tray (5).

5. Apparatus as claimed in claim 4,
**characterized by**
a transparent wall portion (7) of the housing situated in the vicinity of the filling opening (8).

6. Apparatus as claimed in claim 1,
**characterized by**
a drivable wringer (28) with co-acting press rollers (29,30), at least one of which is profiled, for kneading the packaging.

7. Apparatus as claimed in claim 1,
**characterized in that**
the packaging is annular (19) and the dividers (21,22) extend more or less in transverse direction thereof, wherein the filling tube (17) is separated from the two first compartments on the one side by the said second removable divider (22) and on the other side by a third divider (20) and can be cut through to form the end of the filling tube.

8. Apparatus as claimed in claims 8 and 9,
**characterized by**
a reversing roller (32) whereover the packaging can be carried back to the wringer after leaving same.

## Patentansprüche

1. Vorrichtung zum Auffüllen eines von einem Gehäuse umschlossenen Hohlraums, beispielsweise einer Kabelmuffe, mit einem Gemisch aus zwei Komponenten, wobei das Gehäuse eine Einfüllöffnung aufweist, um das Gemisch in dem Hohlraum plazieren zu können, wobei die Vorrichtung ein hohles Konuskeilstück (8) und eine flexible Packung (19) aufweist, welche mit drei Kammern (17, 23, 24) versehen ist, welche von zwei entfernbaren Trenneinrichtungen (21, 22) voneinander separiert sind, wobei zwei der Kammern (23, 24) aneinander angrenzen und die beiden jeweiligen Komponenten aufweisen und die dritte Kammer als ein Einfüllrohr (17) zum Einsetzen in die Einfüllöffnung dient,
wobei die beiden Kammern (23, 24), welche die Komponenten beinhalten, in offener Verbindung miteinander durch Entfernen der ersten Trenneinrichtung (21) gebracht werden können, wonach mittels Durchkneten der Packung die Komponenten ein einheitliches Gemisch ausbilden können,
das Einfüllrohr (17) in die Einfüllöffnung einsetzbar ist, und
die zweite Trenneinrichtung (22) entfernbar ist, so daß das Gemisch in den Hohlraum durch das Einfüllrohr (17) hindurch mittels Herauspressen aus der Packung einfüllbar ist, wobei
die entfernbaren Trenneinrichtungen (21, 22) als zwei elastisch gegeneinander pressende Streifen ausgebildet sind, welche beispielsweise nach Art einer Haarklammer die Packung zusammenpressen, und wobei das hohle Konuskeilstück das Ende (16) des Einfüllrohrs mit der Kante der Einfüllöffnung verbindet, wobei das hohle Konuskeilstück in das Ende (16) einsetzbar ist und dieses Ende (16) in die Einfüllöffnung an einer der Stellung des Konuskeilstücks (9) entsprechenden Stelle einsetzbar ist, wodurch so das Ende des Einfüllrohrs (16) festgeklemmt wird.

2. Vorrichtung nach Anspruch 1, dadurch gekennzeichnet, daß ein Gehäuse mit einer Einfüllöffnung (8), um welche sich eine aufrechtstehende Wand erstreckt, einen Aufnahmekasten (5) ausbildet, auf welchem ein Schließdeckel (6) plaziert werden kann.

3. Vorrichtung nach Anspruch 4, dadurch gekennzeichnet, daß eine Ventilationsöffnung (13) in der Nähe der Einfüllöffnung in dem Gehäuse (8) angeordnet ist und einen darin angeordneten Filter aufweist, um schädliche Abgase zu absorbieren, welche aus dem Gemisch entweichen.

4. Vorrichtung nach Anspruch 5, dadurch gekennzeichnet, daß die Ventilationsöffnung (13) unterhalb der Oberkante des Aufnahmekastens (5) angeordnet ist.

5. Vorrichtung nach Anspruch 4, dadurch gekennzeichnet, daß ein transparenter Wandteil (7) des Gehäuses in der Nähe der Einfüllöffnung (8) angeordnet ist.

6. Vorrichtung nach Anspruch 1, gekennzeichnet durch einen antreibbaren Wringer (28) mit miteinander zusammenwirkenden Druckwalzen (29, 30), wovon zumindest eine mit einem Profil versehen ist, wobei der Wringer zum Durchkneten der Packung dient.

7. Vorrichtung nach Anspruch 1, dadurch gekennzeichnet, daß die Packung (19) ringförmig ist und die Trenneinrichtungen (21, 22) sich mehr oder weniger in Querrichtung dazu erstrecken, wobei das Einfüllrohr (17) von den ersten beiden Kammern auf der einen Seite durch die zweite entfernbare Trenneinrichtung (22) und auf der anderen Seite durch eine dritte Trenneinrichtung (20) separiert ist, und durchgeschnitten werden kann, um so das Ende des Einfüllrohrs auszubilden.

8. Vorrichtung nach Ansprüchen 8 und 9, gekennzeichnet durch eine Umlenkwalze (32), über welche die Packung zurück zu dem Wringer geführt werden kann, nachdem sie diesen verlassen hat.

## Revendications

1. Appareil pour remplir d'un mélange de deux composants une cavité enveloppée par un logement, par exemple une gaine de câble, et comportant une ouverture de remplissage pour placer le mélange dans la cavité, ledit appareil comprenant une pièce en coin conique creuse (18) et un emballage flexible (19), ayant trois compartiments (17, 23,24) mutuellement séparés par deux séparateurs amovibles (21, 22), dont deux compartiments (23, 24) sont contigus et contiennent les deux composants respectifs, le troisième servant de tube de remplissage (17) pour l'insertion dans l'ouverture d'accès,
lesquels deux compartiments (23, 24) contenant les composants peuvent communiquer l'un avec l'autre par enlèvement du premier séparateur (21), à la suite de quoi les deux composants peuvent former le mélange par malaxage de l'emballage,
le tube de remplissage (17) étant inséré dans l'ouverture de remplissage,
et le second séparateur (22) étant amovible, de sorte que le mélange puisse être acheminé dans la cavité au moyen du tube de remplissage (17), par pression de l'emballage,
dans lequel
les séparateurs amovibles (21, 22) sont réalisés sous forme de deux bandes pressées l'une contre l'autre de manière élastique pour serrer l'emballage, par exemple, à la manière d'une épingle à cheveux, et grâce à quoi ladite pièce triangulaire conique en coin creuse accouple l'extrémité du tube de remplissage (16) à l'extrémité de l'ouverture de remplissage, ladite pièce conique en coin creuse étant insérable dans ladite extrémité (16), et ladite extrémité (16) étant insérable dans l'ouverture de remplissage, à l'endroit de la zone correspondant à la position de la pièce en coin (18), serrant ainsi l'extrémité du tube de remplissage (16).

2. Appareil selon la revendication 1, caractérisé par un logement avec une ouverture de remplissage (8) autour de laquelle s'étend une paroi fixe pour former un plateau (5) sur lequel peut être placé un couvercle de fermeture (6).

3. Appareil selon la revendication 2, caractérisé par une ouverture d'aération (13) disposée à proximité de l'ouverture de remplissage dans le logement (8) et ayant un filtre placé à l'intérieur pour absorber les vapeurs dangereuses en provenance du mélange.

4. Appareil selon la revendication 3, caractérisé en ce que l'ouverture d'aération (13) est située en dessous du bord supérieur du plateau (5).

5. Appareil selon la revendication 2, caractérisé par une portion de paroi transparente (7) du logement située à proximité de l'ouverture de remplissage (8).

6. Appareil selon la revendication 1, caractérisé par une essoreuse actionnable (28) avec des rouleaux presseurs coopérants (29, 30), dont au moins un est profilé, pour malaxer l'emballage.

7. Appareil selon la revendication 1, caractérisé en ce que l'emballage est annulaire (19) et les séparateurs (21, 22) s'étendent plus ou moins dans la direction transversale de celui-ci, dans lequel le tube de remplissage (17) est séparé des deux premiers compartiments, d'un côté, par ledit second séparateur amovible (22), et de l'autre côté, par un troisième séparateur (20), et peut être découpé pour former l'extrémité du tube de remplissage.

8. Appareil selon la revendication 6 ou 7, caractérisé par un rouleau inverseur (32) par l'intermédiaire duquel l'emballage peut être ramené vers l'essoreuse après en être sorti.
